# EUROPEAN PATENT APPLICATION

(11) **EP 4 080 096 A1**
(43) Date of publication of application: **26.10.2022**
(21) Application number: 22164913.0
(22) Date of filing: 29.03.2022
(51) Int. Cl.: F16K 31/06, B21D 22/00

(54) **SILENT COMBUSTION GAS SOLENOID VALVE**

(30) Priority: 21.04.2021 CN 202110432687
(71) Applicant: MIKUNI CORPORATION, Chiyoda-ku Tokyo 101-0021 (JP)
(72) Inventor: Tang, Jin-Feng, Cixi (CN); Li, Ping-You, Cixi (CN); Huang, Xu-Jie, Cixi (CN); Okudera, Taichi, Cixi (CN); Shen, Chen-Lu, Cixi (CN); Weng, Ke-Xia, Cixi (CN)
(74) Representative: Zaboliene, Reda

(57) **Abstract**

This invention discloses a silent combustion gas solenoid valve comprising: a movable iron core (1), a static iron core (2), and a duct (3), wherein the movable iron core (1) and the static iron core (2) are respectively located at opposite ends of the duct (3), with the movable iron core (1) including a first part (11) and a second part (12); the first part (11) and the second part (12) are fixedly connected with each other by a connecting member (13), with the second part (12) including a punched cavity (122); the static iron core (2) partially extends into the punched cavity (122), or wraps around the outer surface of the second part (12).

## Description

### Technical Field

The present invention relates to a technical field which is solenoid valve, in particular to a structure of a silent combustion gas solenoid valve.

### Background Art

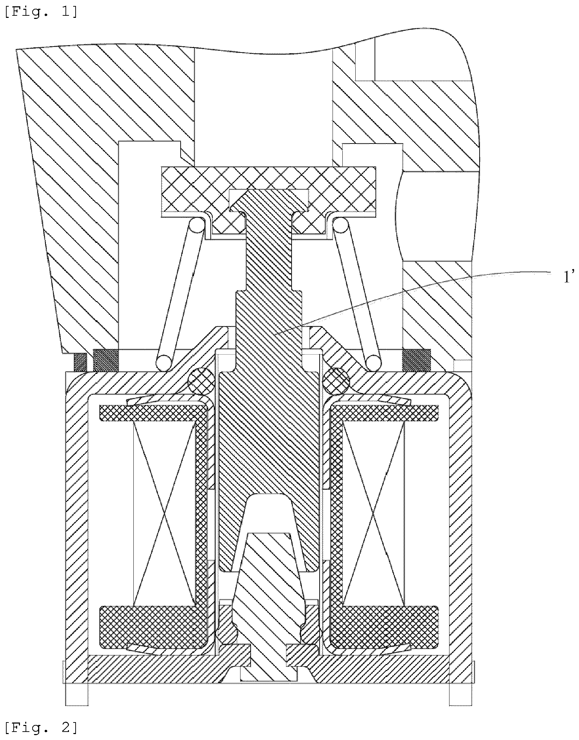

Fig. 1 is a schematic diagram showing a conventional structure of a silent combustion gas solenoid valve. As shown, an upper portion of a movable iron core 1' needs to be treated by cold heading technique, while a tapered concave portion of a lower part of the movable iron core 1' needs to be molded by numerically controlled processing. However, this makes the production cost of the movable iron core 1' too high, resulting in a relatively high cost in manufacturing the silent combustion gas solenoid valve.

### Summary of the invention

In view of the above-mentioned problems in prior art, the present invention is to provide an improved structure for a silent combustion gas solenoid valve, where the movable iron core adopts a splitable structure, the first part thereof adopts a cold heading or an injection molding, and the second part thereof adopts a punch molding, so that the production cost is greatly reduced.

According to the present invention, there is provided an improved silent combustion gas solenoid valve comprising: a movable iron core, a static iron core, and a duct, wherein

the movable iron core and the static iron core are respectively located at opposite ends of the duct, with the movable iron core including a first part and a second part;
the first part and the second part are fixedly connected with each other by a connecting member, with the second part including a punched cavity;
the static iron core partially extends into the punched cavity, or wraps around the outer surface of the second part.

Specifically, the second part is provided with a connecting hole, and the connecting member is clamped in the connecting hole.

In particular, the connecting member has a buckle structure which is clamped in the connecting hole.

Further, the connecting member has a riveting structure, with one end thereof located within the punched cavity, and the other end thereof extending through the connecting hole into the first part, thereby realizing a fixation between the first part and the second part by virtue of the riveting structure.

Moreover, an end of the static iron core is formed in a frustum structure, which partially extends into the punched cavity and is partially located outside the punched cavity. In addition, the side wall of the punched cavity is provided with a tapered surface which matches the shape of the frustum structure of the static iron core, with a predetermined distance formed between the frustum structure and the tapered surface to form an air gap.

Further, inclination angles of the frustum structure and the tapered surface are 5°- 40°.

Moreover, the static iron core is formed as a concave structure which is located on the outside of the second part, and the outside wall of the second part and the inner side wall of the static iron core are both formed as tapered surfaces, with a predetermined distance formed between the two tapered surfaces to form an air gap.

In addition, an inclination angle of the two tapered surfaces are 5°- 40°.

Specifically, an elastic member is arranged in the punched cavity, with one end of the elastic member pressed against the end of the connecting member, and the other end thereof pressed against the static iron core.

### Effects of the Invention

The present invention is to provide an improved structure for a silent combustion gas solenoid valve, in which the movable iron core adopts a splitable structure, the first part thereof adopts a cold heading or an injection molding, and the second part thereof adopts a punch molding, thereby making it possible to greatly reduce a cost for manufacturing a silent combustion gas solenoid valve.

### Description of the Drawings

Fig. 1 is a schematic diagram showing a conventional structure of a silent combustion gas solenoid valve;
Fig. 2 is a schematic diagram showing a structure of a silent combustion gas solenoid valve according to first embodiment of the present invention.
Fig. 3 is a schematic diagram showing a structure of a movable iron core provided in the first embodiment of the present invention;
Fig. 4 is a schematic diagram showing a structure of a movable iron core provided in second embodiment of the present invention;
Fig. 5 is a schematic diagram showing a structure of a silent combustion gas solenoid valve according to the second embodiment.

### Description of Embodiments

In order to make clearer the objects, technical solutions, and advantages of the present invention, the following further describes the present invention in detail through embodiments and in conjunction with the accompanying drawings. However, it should be understood that the specific embodiments described here are only used to explain the present invention, but not used to limit the present invention.

The serial numbers assigned to various components herein, such as "first", "second", etc., are only used to distinguish the described objects and do not have any sequential or technical meanings. The "connection" and "linkage" mentioned in this application means a direct or indirect connection unless otherwise specified. In the description of the present invention, it should be understood that the terms "upper", "lower", "front", "rear", "left", "right", "vertical", "horizontal", "top", "bottom", "inner", "outer", "clockwise", "counterclockwise", etc. are based on the orientation or positional relationship shown in the drawings. Namely, the above terms are used only for describing the present invention and simplifying the description, rather than indicating or implying that the device or elements referred to must have a specific orientation, be constructed and operated in a specific direction. Accordingly, the above terms cannot be understood as a limitation to the present invention.

In the present specification describing the present invention, unless expressly stipulated or defined otherwise, a phrase the first feature "on" or "under" the second feature may be understood as having these features to be in a direct contact with each other or in an indirection contact through other medium. Moreover, a phrase first feature is "on", "above" or "on the top of" the second feature means that first feature is at a position which is right above the second feature or obliquely above the second feature, or only means that the first feature is at a position higher than the second feature. A phrase first feature is "under", "below" or "on the underside of" the second feature means that the first feature is right under the second feature or obliquely under the second feature, or it simply means that the level of the first feature is lower than the second feature.

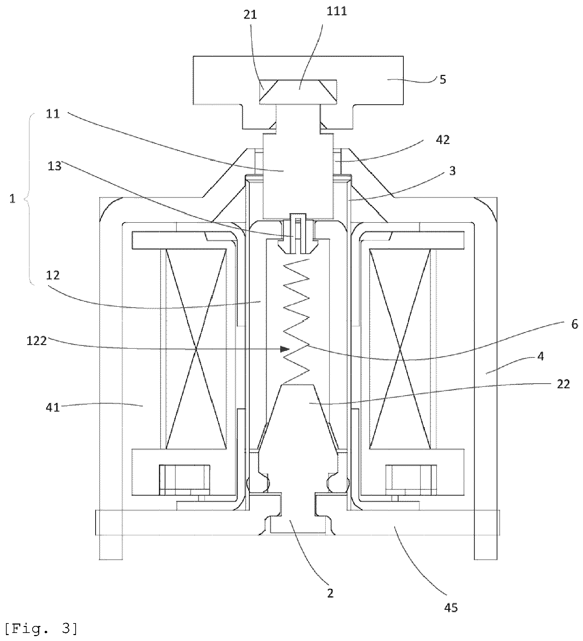

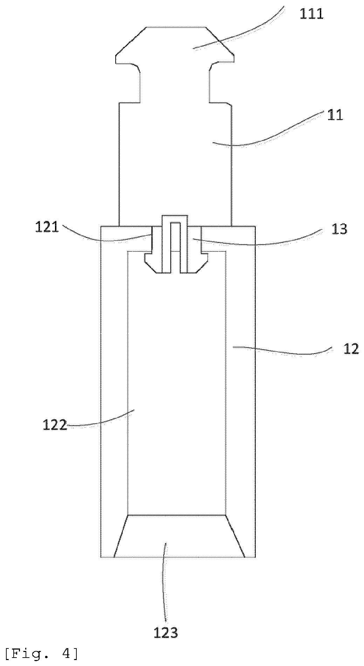

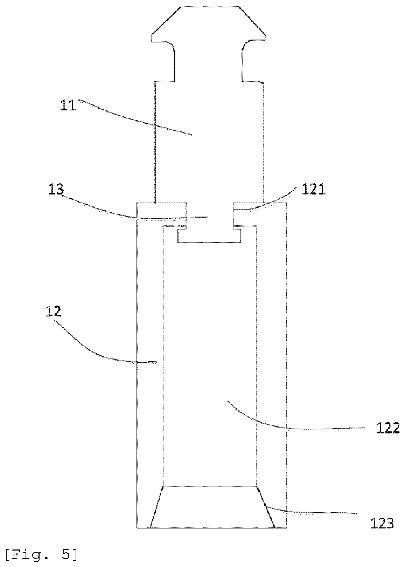

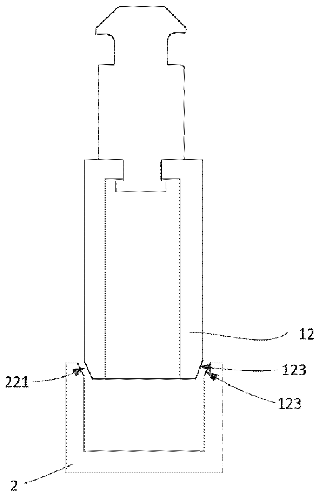

The following description will be given with reference to Figs. 2 - 5. Fig. 2 is a schematic diagram showing a structure of a silent combustion gas solenoid valve according to a first embodiment of the present invention. Fig. 3 is a schematic diagram showing a structure of a movable iron core provided in the first embodiment of the present invention. Fig. 4 is a schematic diagram showing a structure of a movable iron core provided in second embodiment of the present invention. Fig. 5 is a schematic diagram showing a structure of a silent combustion gas solenoid valve according to a second embodiment.

The invention discloses a structure of a silent combustion gas solenoid valve. This structure includes: a movable iron core 1, a static iron core 2, a duct 3, a bracket 4, and a rubber pad 5.

The bracket 4 has a shell structure and includes an accommodating cavity 41. One end of the accommodating cavity 41 is sealed by a fixing plate 45, and the other end of the accommodating cavity 41 is provided with a through hole 42 communicating with the accommodating cavity 41. In particular, the through hole 42 is coaxially arranged with the accommodating cavity 41 and is arranged on one end of the accommodating cavity 41 facing the rubber pad 5.

The duct 3 is disposed in the bracket 4, more specifically, the duct 3 is disposed in the accommodating cavity 41 and is arranged coaxially with the through hole 42.

The movable iron core 1 and the static iron core 2 are respectively located at opposite ends of the duct 3.

Specifically, the movable iron core 1 is movably arranged in the duct 3, and one end thereof extends out of the duct 3 and the bracket 4 and is connected with the rubber pad 5.

More specifically, the movable iron core 1 includes a first part 11 and a second part 12.

The second part 12 is provided with a punched cavity 122 . Specifically, the punched cavity 122 is formed by punch molding which needs only a greatly lower cost as compared to numerical control machining.

The first part 11 and the second part 12 are fixedly connected to each other by the connecting member 13.

More specifically, the first part 11 is provided with a shoulder 111, and the rubber pad 5 is provided with a stepped pit 21 matching the shape of the shoulder 111. Here, the opening of the stepped pit 21 facing toward the bracket 4 is smaller than a pit portion away from the bracket 4, and the shoulder 111 is accommodated in the stepped pit 21 and fixed in the rubber pad 5 in a manner such that the shoulder 111 will not be removed from the rubber pad 5, thereby ensuring that the movable iron core 1 and the rubber pad 5 are fixedly connected to each other.

Further, the second part 12 is provided with a connecting hole 121, and the connecting member 13 is clamped in the connecting hole 121. As shown in Fig. 3, optionally, the connecting member 13 has a buckle structure. Specifically, the first part 11 is made of plastic material, the connecting member 13 is integrally formed with the first part 11. Moreover, the connecting member 13 is formed as a claw structure, and the end of the connecting member 13 is formed as a chamfered shape, which can facilitate the insertion of the connecting member 13 into the first part 11. In addition, the claw structure has an elasticity, and such claw structure can be pinched to pass through the connecting hole 121. After passing through the connecting hole, the diameter of the claw structure may be restored, so that the connecting member 13 can be clamped in the connecting hole 121.

As shown in Fig. 4, optionally, the connecting member 13 has a riveting structure, one end of the riveting structure is located in the punched cavity, and the other end of the riveting structure is extending through the connecting hole 121 into the first part 11, thereby realizing a fixation between the first part and the second part by virtue of riveting. Specifically, the first part 11 is made of metal material and can be molded by cold heading, while the connecting member 13 may be a rivet or the like. The rivet extends through the connecting hole 121 into the first part 11 of the movable iron core, thereby realizing a fixed connection by virtue of riveting.

The movable iron core 1 in the present embodiment adopts the cold heading in the first part 11 or adopts the injection molding in the first part 11, and adopts the punching in the second part 12, so that the manufacturing cost is much lower as compared to the cold heading and numerically controlled machining in the prior art. Thus, the cost of producing the structure of the silent gas solenoid valve is greatly reduced. As shown in Fig. 2, one part of the static iron core 2 extends into the punched cavity 122, and the other part thereof is located outside the punched cavity 122.

Specifically, the end of the static iron core 2 is formed into a frustum structure 22. The frustum structure 22 partially extends into the punched cavity 122, and is partially located outside the punched cavity 122. Here, side wall of the punched cavity 122 is provided with a tapered surface 123 which matches the shape of the frustum structure 22 of the static iron core 2. Besides, the frustum structure 22 and the tapered surface 123 are separated by a predetermined distance to form an air gap 221. In this way, combustion gas can be provided in the air gap 221, and the movable iron core 1 can move towards the static iron core 2 under an action of electromagnetic force.

Optionally, the inclination angles of the frustum structure 22 and the tapered surface 123 are 5°- 40°.

As shown in Fig. 5, the static iron core 2 is formed to wrap around the second part 12.

The static iron core 2 is formed as a concave structure, and such a concave structure is formed to wrap around the outer side of the second part 12, and the outer side wall of the second part 12. Here, the outer sidewall of the second part 12 and the inner sidewall of the static iron core 2 are both configured as tapered surfaces 123, and a predetermined distance between the two tapered surfaces 123 is formed as an air gap 221.

Optionally, inclination angles of the tapered surfaces 123 are all within 5°- 40°.

In the structure of the silent combustion gas solenoid valve provided by the embodiment of the present invention, the movable iron core 1 adopts a splitable structure, the first part 11 adopts a cold heading or injection molding, and the punched cavity 122 of the second part 12 adopts a punch molding, whose manufacturing cost is much lower than a numerically controlled processing. Therefore, as compared with a conventional molding in the prior art, the molding of the movable iron core 1 involves only a low production cost, thereby greatly reducing the cost for manufacturing the silent combustion gas solenoid valve. Moreover, the forming of the punched cavity 122 can realize a function expansion of the entire gas solenoid valve, for example, adding structures in the punched cavity 122 can realize various functions.

Further, the punched cavity 122 is provided with an elastic member 6, one end of the elastic member 6 abuts on the end of the connecting member 13, and the other end abuts on the end of the static iron core 2.

Specifically, the elastic member 6 is used for effecting a restoration within the punched cavity when the rubber pad 5 and the movable iron core 1 are not subjected to electromagnetic force. Optionally, the elastic member 6 may be a restoration spring.

The technical features of the above embodiments can be combined arbitrarily as needed. In order to make the description concise, not all possible combinations of the technical features in the above embodiments have been described. However, as long as there is no contradiction in the combination of these technical features, they should all be considered as falling into the range described in this specification.

The above examples only express several implementation modes of the present invention, and the descriptions are relatively specific and detailed, but they should not be understood as a limitation to the patent scope of the present invention. Further, it should be pointed out that for those of ordinary skill in the art, several modifications and improvements can be made, and these all fall within the protection scope of the present invention, without departing from the concept of the invention. Therefore, the patent protection scope of the present invention should be subject to the below appended claims.

### Explanation of Numerical References

- 1: movable iron core;
- 11: first part;
- 111: shoulder;
- 12: second part;
- 121: connecting hole;
- 122: punched cavity;
- 123: tapered surface;
- 13: connecting member;
- 2: static iron core;
- 21: stepped pit;
- 22: frustum structure;
- 221: air gap;
- 23: concave structure;
- 3: duct;
- 4: bracket;
- 41: accommodating cavity;
- 42: through hole;
- 45: fixing plate;
- 5: rubber pad;
- 6: elastic member.

## Claims

1. A silent combustion gas solenoid valve comprising: a movable iron core, a static iron core, and a duct, wherein
the movable iron core and the static iron core are respectively located at opposite ends of the duct, with the movable iron core including a first part and a second part;
the first part and the second part are fixedly connected with each other by a connecting member, with the second part including a punched cavity;
the static iron core partially extends into the punched cavity, or wraps around the outer surface of the second part.

2. The silent combustion gas solenoid valve according to claim 1, wherein the second part is provided with a connecting hole, and the connecting member is clamped in the connecting hole.

3. The silent combustion gas solenoid valve according to claim 2, wherein the connecting member has a buckle structure which is clamped in the connecting hole.

4. The silent combustion gas solenoid valve according to claim 2, wherein the connecting member has a riveting structure, with one end thereof located within the punched cavity, and the other end thereof extending through the connecting hole into the first part, thereby realizing a fixation between the first part and the second part by virtue of the riveting structure.

5. The silent combustion gas solenoid valve according to claim 1, wherein
an end of the static iron core is formed in a frustum structure, which partially extends into the punched cavity and is partially located outside the punched cavity;
the side wall of the punched cavity is provided with a tapered surface which matches the shape of the frustum structure of the static iron core, with a predetermined distance formed between the frustum structure and the tapered surface to form an air gap.

6. The silent combustion gas solenoid valve according to claim 5, wherein inclination angles of the frustum structure and the tapered surface are 5°- 40°.

7. The silent combustion gas solenoid valve according to claim 1, wherein the static iron core is formed as a concave structure which is located on the outside of the second part, and the outside wall of the second part and the inner side wall of the static iron core are both formed as tapered surfaces, with a predetermined distance formed between the two tapered surfaces to form an air gap.

8. The silent combustion gas solenoid valve according to claim 7, wherein an inclination angle of the two tapered surfaces are 5°- 40°.

9. The silent combustion gas solenoid valve according to any one of claims 1 - 8, wherein an elastic member is arranged in the punched cavity, with one end of the elastic member pressed against the end of the connecting member, and the other end thereof pressed against the static iron core.
